# EUROPEAN PATENT SPECIFICATION

(11) **EP 0 909 933 B1**
(45) Date of publication and mention of the grant of the patent: **24.09.2003**
(21) Application number: 98203429.0
(22) Date of filing: 12.10.1998
(51) Int. Cl.: F28F 27/02, F24F 12/00, F28D 9/00

(54) **Cross-flow heat exchanger with bypass-valve**
Kreuzstromwärmetauscher mit Bypassventil
Echangeur de chaleur à courants croisés avec vanne de dérivation

(30) Priority: 16.10.1997 NL 1007298
(43) Date of publication of application: 21.04.1999
(73) Proprietor: J.E. Stork Ventilatoren B.V., 8041 AM Zwolle (NL)
(72) Inventor: de Graaff, Abraham Anthony John, 8016 MA Zwolle (NL)
(74) Representative: Schumann, Bernard Herman Johan

(56) References cited:
- FR-A- 2 626 969
- US-A- 4 462 459
- US-A- 5 000 253
- US-A- 5 024 263
- PATENT ABSTRACTS OF JAPAN vol. 012, no. 340 (M-740), 13 September 1988 & JP 63 099440 A (MATSUSHITA SEIKO CO LTD), 30 April 1988

## Description

The invention relates to a cross-flow heat exchanger for use in a space heating system which is adapted for heating air by means of a burner;
which heat exchanger comprises two through-flow circuits physically separated from each other and thermally coupled to each other by means of a number of parallel walls (13),
which circuits are arranged in interwoven relation and through which flow, in mutual transverse direction, respectively
(1) an air flow from an outside air inlet to a discharge to the space for heating
(2) a gas flow from an inlet, for instance for hot flue gases coming from the burner, to a discharge for flue gases to the outside, or air coming from the space to a discharge therefor to the outside,
which walls are all substantially congruent and are held in mutual connection by construction means, which heat exchanger generally has a substantially prismatic form, the main direction of which parallel to the generating lines extends transversely of the main planes of the walls,
whereby in the prismatic form a smaller prismatic part serving as bypass circuit with the same section transversely of the main direction is free of walls and comprises a cavity bounded by two walls, which cavity forms part of the first through-flow circuit, in which cavity is arranged a valve which is displaceable between a closed position and an open position by means of control means coupled to the valve, which valve comprises a shaft rotatable by a drive, and bears a substantially plate-like element which extends substantially over the whole transverse dimension of said smaller prismatic part, extends between the side walls of the smaller prismatic part in the closed position of the valve, and is at a distance from at least one of these side walls in the open position of the valve.

Such a heat exchanger is known from the French patent document FR-A-2 626 969, which discloses a so called cross-flow heat exchanger with a bypass.

Using such a known heat exchanger can lead to a problem in a certain period of the year, such as the summer period, in-which the outside temperature is higher than the inside temperature. In that case the system with heat recovery will work reversely and the room will be heated relative to the outside temperature. Under circumstances this can be undesirable.

The present invention has for its object to improve upon the above known heat exchanger, and especially improving the operation during the summer period.

Therefore the present invention provides the control means are connected to a sensor for the outside temperature or the temperature of the air flow from the outside air inlet.

It is often found to be desirable for the first through-flow circuit to comprise a part through which not all cold outside air reaches the space for heating in preheated state. In certain conditions it may be desired to feed a fraction of the admitted outside air unheated to the space for heating. It is per se known for this purpose to incorporate a bypass through-flow circuit parallel to the first through-flow circuit of the heat exchanger.

A preferred embodiment has the special feature that the axis is placed symmetrically in relation to said side walls. This embodiment has the advantage that the air flowing along loads the plate-like element symmetrically, which element must of course be embodied symmetrically relative to the axis. The valve can hereby also be rotated with very little effort when air is flowing by, since no resistance is encountered by the air flowing by. In the stationary situation the drive with this structure is not under strain of rotation either.

In preference the cross-flow heat exchanger further has the special feature that the plate-like element is mounted rotatably at both its ends. Thus is avoided, particularly in the closed situation, that the plate-like element is placed under strain of bending by air flowing by.

A specific embodiment has the special feature that the drive comprises a motor with a reduction gearing. A smooth displacement of the plate-like element can hereby be realized, wherein the force can be sufficiently large under all conditions owing to the slow movement.

A simple embodiment has the special feature that the drive comprises two limit switches which respectively determine the open and the closed position of the valve. This structure has the advantage that both end positions can be determined with very simple, reliable and inexpensive means.

An alternative has the special feature that the drive comprises a stepping motor. A stepping motor enables in simple manner a possibly desired intermediate position. Such an intermediate position could in principle also be achieved with an ordinary motor. In that case however, position pick-up means must be used to signal the momentary position of the plate-like valve element to the control means, which respond thereto by comparing the momentary position with a nominal position set by a user or determined on the basis of program control and external signals.

A specific embodiment has the special feature that the control means are connectable for control purposes to an outdoor temperature sensor.

The system according to the invention is a system which is used in a space heating system with heat recovery. Contaminated inside air is replaced by fresh outside air, wherein exchange of thermal energy takes place between the heated inside air to be discharged and the still unheated, incoming outside air.

In known systems there occurs a problem in a period, for instance a summer period, when the outdoor temperature is higher than the indoor temperature. In this case the system with heat recovery will begin to operate in reverse, and the space in question is heated in relation to the outdoor temperature. In certain conditions this may be undesirable. In most comparable devices with heat recovery, the supply ventilation is simply switched off in these conditions. If for some reason this is not possible, such as in the case of strongly noise-charged outside walls which make it impossible for instance to open windows for natural ventilation, or because of personal circumstances such as allergies, a bypass circuit must be applied. This bypass could optionally be arranged outside the space heating system. When the bypass is switched on, the outside air will be re-routed round the space heating system with heat recovery in the active state of the bypass.

The present invention start from the principle that in the space heating system a cross-flow heat exchanger must be present which must itself be provided with the bypass system. This provides the possibility of a very simple structure.

In a preferred embodiment the heat exchanger according to the invention has the particular feature that the heat exchanger has the same general form as a known heat exchanger and is therefore interchangeable therewith.

The heat exchanger can also have the special feature that the prismatic part serving as bypass circuit is a separate unit. Such a relatively small prismatic part serving as bypass circuit forms a plug-in module and can be placed in a heat exchanger which is provided with an empty space adapted for this purpose in which said relatively small prismatic part fits.

In respect of both this embodiment and the embodiment described in the foregoing paragraph, attention must be drawn in this case to the fact that the bypass space causes a certain decrease in the effective dimensions of the heat exchanger. In practice however, it is found that heat exchangers in space heating systems are amply dimensioned such that this does not pose a problem.

One of the described embodiments is embodied such that the control means, which can comprise for instance a microprocessor or the like, are connectable for control to an outdoor temperature sensor.

The system can for instance have the following functional situations:
(1) Outside air temperature lower than 15°C; bypass closed; space heating system active. The supplied outside air is heated by the discharged inside air.
(2) Outside air temperature lower than 15°C or higher than 20°C; bypass open; space heating system not active. The supplied outside air is carried directly to the space without being heated.
(3) Outside air temperature lower than 20°C; bypass closed; space heating system active. The supplied outside air is heated by the discharged inside air.

Said levels of 15°C and 20°C are stated by way of example. The system can be designed for instance such that the user of the space heating system can adjust these temperatures.

The described adjustment can result in a lesser heating of the dwelling in the summer during the day (when it is warm outside) and a more rapid cooling of the dwelling during the night (when it is relatively cool outside).

The invention will now be elucidated with reference to the annexed drawing. Herein:
figure 1 shows a partly broken away perspective view of a part of a space heating system incorporating a cross-flow heat exchanger according to the invention;
figure 2 shows a perspective view of a known heat exchanger;
figure 3a shows a view corresponding with figure 2 of the heat exchanger of figure 1 in the situation where the bypass valve is closed; and
figure 3b shows a view corresponding with figure 3a in the situation where the bypass valve is fully opened.

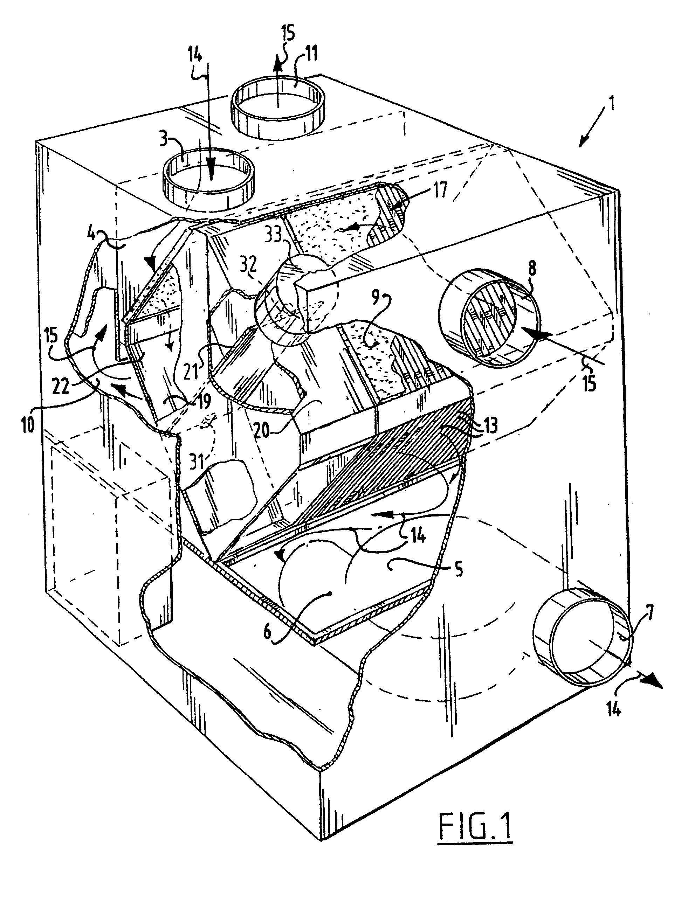

Figure 1 shows a part of a space heating device 1. A cross-flow heat exchanger 2 is incorporated therein.

Via an inlet 2 cold outside air is fed to heat exchanger 2 via a first intake cavity 4. Via a first discharge cavity 5 the heated outside air, which has passed through heat exchanger 2 via a first through-flow circuit, is discharged by a fan 6 to an outlet 7 through which heated air is guided to the space for heating.

Via a second inlet 8 the air extracted from the space is fed via a second intake cavity 8 to a second through-flow circuit of heat exchanger 2 and discharged therefrom via a second discharge cavity 10 to an outlet 11 for discharge to the outside. Using device 1 there thus takes place an effective recovery of the heat present in the air to be discharged from the space.

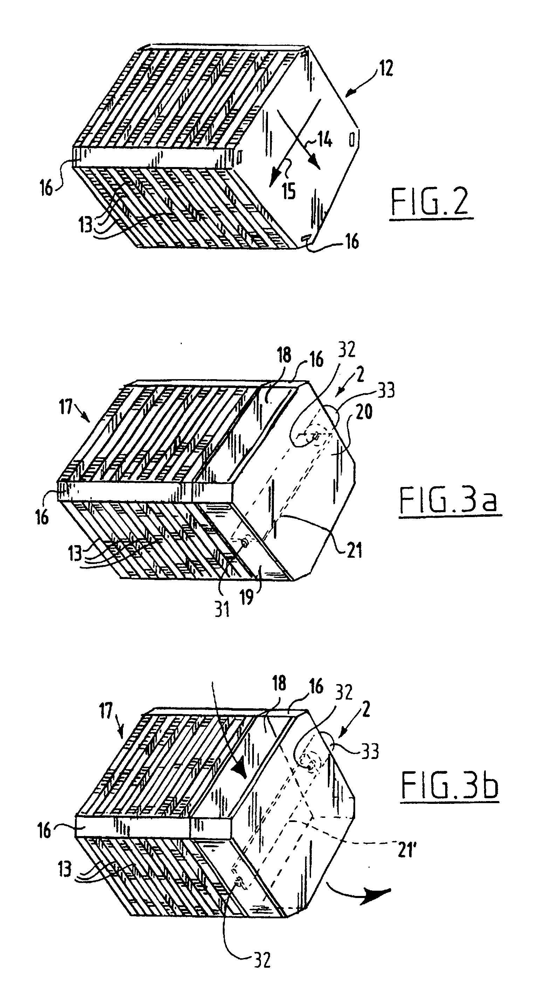

Before discussion of the heat exchanger 2 according to the invention, reference is first made to figures 2, 3a and 3b.

Figure 2 shows a known heat exchanger 12. This is of the cross-flow type with two through-flow circuits which are physically separated from each other and thermally coupled to each other by means of a number of parallel walls 13, for instance of aluminium. These circuits are mutually interwoven and flow therethrough can take place in mutually transverse direction. The general direction of said two through-flow circuits is indicated on the right-hand end wall by means of two arrows 14, 15. The embodiment of this heat exchanger 12 is generally known. The walls 13 are held in mutual connection by means of construction means 16.

As shown in figure 2, heat exchanger 2 has a substantially prismatic form, the main direction of which parallel to the generating lines extends transversely of the main planes of the walls.

Heat exchanger 17 as according to figures 3a and 3b has the same generally prismatic form as heat exchanger 12 of figure 2. It is hereby fully interchangeable with this heat exchanger 12.

Heat exchanger 17 has the special feature relative to heat exchanger 12 that in the prismatic form a smaller prismatic form 18 with the same section transversely of the main direction is free of walls and thus comprises a cavity 18 bounded by two walls. This cavity 18 forms part of the first through-flow circuit which for heat exchanger 12 is designated with 14 in figure 2. In this respect the cavity is therefore bounded at the sides by two walls 19, 20. Arranged in cavity 18 is a plate 21 serving as valve body which is displaceable between a closed position as according to figure 3a and an open position as according to figure 3b. In the open position shown in figure 3b the valve is designated with 21'. Plate 21 is centrally mounted on its longitudinal ends in rotation bearings 31, 32 which together define a rotation axis which extends symmetrically relative to the prismatic part 18. Plate 21 is likewise placed symmetrically relative to the said axis. Plate 21 can thus be displaced between the closed position of figure 3a, in which the long side edges of plate 21 substantially connect onto walls 19, 20, and the open position, in which plate 21 extends in a plane extending more or less parallel to walls 19, 20. Rotation of plate 21 takes place with a drive 33 embodied in this case as stepping motor. Control thereof takes place by central control means, for instance comprising a microprocessor which is connected for instance to a space thermostat, an outdoor temperature sensor and control means which may comprise for instance a keyboard for operation by a user.

The air flow through cavity 18 is not carried along the surfaces of heat exchanger 17. As a result of this bypass cavity 18 a direct through-flow of outside air therefore takes place outside the heat exchanger.

A space heating system is generally known and applied on a large scale. Dwellings equipped with such a system must also remain ventilated by the intake fan during the summer. It is noted in this respect that it is not always desirable or even possible to open windows, for instance due to street noise. Adequate ventilation of the spaces in these dwellings is nevertheless necessary. For this purpose the valve 21 is placed in its position 21'. Supply of air with a considerably reduced flow resistance by means of fan 6 is thus also ensured in the summer. This also results in a considerable reduction in the required capacity of fan 6.

Attention is drawn to the fact that heat exchanger 17 according to figures 1 and 3 preferably has the same external form as the known heat exchanger of figure 2. Heat exchanger 17 can thus be used to replace the known heat exchanger 12.

Attention is further drawn to the fact that the invention also relates to a bypass unit which is adapted and intended for addition to a heat exchanger which is provided with a space for accommodating such a unit. This bypass unit according to the invention is specified in claim 10.

## Claims

1. Cross-flow heat exchanger (12,17) for use in a space heating system (1) which is adapted for heating air by means of a burner;
which heat exchanger comprises two through-flow circuits physically separated from each other and thermally coupled to each other by means of a number of parallel walls (13),
which circuits are arranged in interwoven relation and through which flow, in mutual transverse direction, respectively
(1) an air flow from an outside air inlet to a discharge to the space for heating
(2) a gas flow from an inlet, for instance for hot flue gases coming from the burner, to a discharge for flue gases to the outside, or air coming from the space to a discharge therefor to the outside,
which walls (13) are all substantially congruent and are held in mutual connection by construction means (16), which heat exchanger generally has a substantially prismatic form, the main direction of which parallel to the generating lines extends transversely of the main planes of the walls,
whereby in the prismatic form a smaller prismatic part (18) serving as bypass circuit with the same section transversely of the main direction is free of walls and comprises a cavity bounded by two walls (19,20), which cavity forms part of the first through-flow circuit, in which cavity is arranged a valve (21,21') which is displaceable between a closed position and an open position by means of control means coupled to the valve, which valve comprises a shaft rotatable by a drive (33), and bears a substantially plate-like element which extends substantially over the whole transverse dimension of said smaller prismatic part, extends between the side walls of the smaller prismatic part in the closed position of the valve, and is at a distance from at least one of these side walls in the open position of the valve, **characterized in that** the control means are connected to a sensor for the outside temperature and or the temperature of the air flow from the outside air inlet.

2. Heat exchanger as claimed in claim 1 in which the control means are arranged such that, with an outside temperature below a certain preset value, such as 15°C or above a certain preset value, such as 20°C, the valve is brought into a opened position.

3. Heat exchanger as claimed in claim 2 in which the preset temperatures are adjustable by the user.

4. Heat exchanger as claimed in claims 1,2 or 3, in which the shaft has an axis of rotation which extends substantially in the transverse direction relative to the flow direction of the first trough-flow circuit.

5. Heat exchanger as claimed in one of more of the claims 1-4 wherein the axis is placed symmetrically in relation to said side walls.

6. Heat exchanger as claimed in claim 5, wherein the plate-like element is mounted rotatably on both its ends.

7. Heat exchanger as claims in one or more of the claims 1-6, wherein the drive comprises a motor with a reduction gearing.

8. Heat exchanger as claimed in claim 7, wherein the drive comprises two limit switches respectively determining the open and the closed position of the valve.

9. Heat exchanger as claimed in claim 7 or 8, wherein the drive (33) comprises a stepping motor.

10. Heat exchanger as claimed in claim 9, wherein the heat exchanger has the same general form as a known heat exchanger and is therefore interchangeable therewith.

11. Heat exchanger as claimed in claim 10, wherein the prismatic part serving as bypass circuit is a separate unit.

## Patentansprüche

1. Gegenstromwärmetauscher (12, 17) zur Verwendung in einem Raumheizsystem (1), das zum Heizen von Luft mittels eines Brenners ausgelegt ist;
wobei der Wärmetauscher zwei vermittels einer Anzahl von parallelen Wänden (13) voneinander physisch getrennte und miteinander thermisch gekoppelte Durchfluss-Kreisläufe umfasst;
wobei die Kreisläufe in verwobener Beziehung angeordnet sind und durch die in zueinander entgegen gesetzter Richtung jeweils fließen
(1) ein Luftstrom von einem Außenlufteinlass zu einem Ausstoß in den Raum zum Heizen
(2) ein Gasstrom von einem Einlass, beispielsweise für heiße, vom Brenner kommende Rauchgase, zu einem Ausstoß für Rauchgase nach außen, oder Luft, die vom Raum kommt, zu einem Ausstoß dafür nach außen,
wobei die Wände (13) alle im wesentlichen kongruent und durch Aufbaumittel (16) in wechselweiser Verbindung gehalten sind, der Wärmetauscher eine im wesentlichen prismatische Form aufweist und dessen Hauptrichtung parallel zu den erzeugenden Leitungen sich quer zur Hauptrichtung der Wände erstreckt,
wobei in der prismatischen Form ein kleinerer prismatischer Teil (18), der als Umgehungskreislauf mit demselben Querschnitt quer zur Hauptrichtung dient, frei von Wänden ist und einen von zwei Wänden (19, 20) begrenzten Hohlraum umfasst, der einen Teil des ersten Durchflusskreislaufs bildet und in dem ein Ventil (21, 21') angeordnet ist, das mittels eines mit dem Ventil gekoppelten Steuermittels zwischen einer geschlossenen Stellung und einer offenen Stellung verrückbar ist, wobei das Ventil eine durch einen Antrieb (33) drehbare Welle umfasst und ein im wesentlichen plattenartiges Element trägt, das sich im wesentlichen über die gesamte Querrichtung des kleineren prismatischen Teils erstreckt, sich zwischen den Seitenwänden des kleineren prismatischen Teils in der geschlossenen Stellung des Ventils erstreckt und sich in der offenen Stellung des Ventils in einem Abstand von zumindest einer dieser Seitenwände befindet, **dadurch gekennzeichnet, dass** das Steuermittel mit einem Sensor für die Außentemperatur und/oder die Temperatur des Luftstroms vom Außenlufteinlass verbunden ist.

2. Wärmetauscher gemäß Anspruch 1, bei dem die Steuermittel so angeordnet sind, dass bei einer Außentemperatur unter einem bestimmten, vorgegebenen Wert, wie 15°C, oder über einem bestimmten, vorgegebenen Wert, wie 20°C, das Ventil in eine geöffnete Stellung gebracht wird.

3. Wärmetauscher gemäß Anspruch 2, bei dem die vorgegebenen Temperaturen von einem Nutzer einstellbar sind.

4. Wärmetauscher gemäß Anspruch 1, 2, oder 3, bei dem die Welle eine Rotationsachse aufweist, die sich im wesentlichen in Querrichtung relativ zur Flussrichtung des ersten Durchflusskreislaufs erstreckt.

5. Wärmetauscher gemäß einem oder mehreren der Ansprüche 1-4, wobei die Achse symmetrisch in Bezug auf die Seitenwände platziert ist.

6. Wärmetauscher gemäß Anspruch 5, wobei das plattenartige Element an seinen beiden Enden drehbar montiert ist.

7. Wärmetauscher gemäß einem oder mehreren der Ansprüche 1-6, wobei der Antrieb einen Motor mit einem Reduktionsgetriebe umfasst.

8. Wärmetauscher gemäß Anspruch 7, wobei der Antrieb zwei Begrenzungsschalter umfasst, die jeweils die offene und geschlossene Stellung des Ventils bestimmen.

9. Wärmetauscher gemäß Anspruch 7 oder 8, wobei der Antrieb (33) einen Schrittmotor umfasst.

10. Wärmetauscher gemäß Anspruch 9, wobei der Wärmetauscher dieselbe allgemeine Form aufweist wie ein bekannter Wärmetauscher und daher mit ihm austauschbar ist.

11. Wärmetauscher gemäß Anspruch 10, wobei der als Umgehungskreislauf dienende prismatische Teil eine getrennte Einheit ist.

## Revendications

1. Echangeur thermique à courants croisés (12, 17) destiné à être utilisé dans un système de chauffage (1) pour un espace qui est adapté pour chauffer de l'air au moyen d'un brûleur ;
lequel échangeur thermique comprend deux circuits d'écoulement physiquement séparés l'un de l'autre et thermiquement couplés l'un à l'autre au moyen d'un certain nombre de parois parallèles (13),
lesquels circuits sont agencés dans une relation entrelacée et à travers lesquels s'écoulent, suivant une direction transversale mutuelle, respectivement,
(1) un flux d'air à partir d'un orifice d'admission d'air externe vers une décharge dans l'espace devant être chauffé
(2) un flux de gaz à partir d'un orifice d'admission, par exemple pour des gaz chauds en provenance du brûleur, vers une décharge pour des gaz chauds vers l'extérieur, ou de l'air en provenance de l'espace vers une décharge par conséquent vers l'extérieur,
lesquelles parois (13) sont toutes essentiellement congruentes et maintenues en connexion mutuelle par des moyens de construction (16), lequel échangeur thermique a de manière générale une forme prismatique, dont la principale direction parallèle aux génératrices s'étend de manière transversale aux plans principaux des parois,
moyennant quoi dans la forme prismatique une partie prismatique plus petite (18) servant de circuit de dérivation avec la même coupe transversale à la direction principale est exempte de parois et comprend une cavité reliée par deux parois (19, 20), laquelle cavité forme une partie du premier circuit d'écoulement, dans laquelle cavité est agencée une vanne (21, 21') qui peut être déplacée entre une position fermée et une position ouverte au moyen de moyens de commande couplés à la vanne, laquelle vanne comprend un arbre pouvant tourner grâce à un dispositif d'entraînement (33), et supporte un élément sensiblement similaire à une plaque qui s'étend sensiblement sur toute la dimension transversale de ladite partie prismatique plus petite, s'étend entre les parois latérales de la partie prismatique plus petite dans la position fermée de la vanne, et est à une distance d'au moins une de ces parois latérales dans la position ouverte de la vanne, **caractérisé en ce que** les moyens de commande sont connectés à un détecteur de la température extérieure et ou de la température de l'écoulement de l'air à partir de l'orifice d'admission d'air externe.

2. Echangeur thermique selon la revendication 1, dans lequel les moyens de commande sont agencés de telle sorte que, avec une température extérieure inférieure à une certaine valeur préconfigurée, tel que 15° C ou au dessus d'une certaine valeur préconfigurée, tel que 20° C, la vanne est amenée dans une position ouverte.

3. Echangeur thermique selon la revendication 2, dans lequel les températures préconfigurées peuvent être ajustées par l'utilisateur.

4. Echangeur thermique selon l'une quelconque des revendications 1, 2 ou 3, dans lequel l'arbre possède un axe de rotation qui s'étend sensiblement suivant la direction transversale par rapport à la direction d'écoulement du premier circuit d'écoulement.

5. Echangeur thermique selon l'une quelconque des revendications 1 à 4, dans lequel l'axe est placé de manière symétrique en relation avec lesdites parois latérales.

6. Echangeur thermique selon la revendication 5, dans lequel l'élément similaire à une plaque est monté de manière à pouvoir tourner sur ses deux extrémités.

7. Echangeur thermique selon l'une quelconque des revendications 1 à 6, dans lequel le dispositif d'entraînement comprend un moteur avec un embrayage de réduction.

8. Echangeur thermique selon la revendication 7, dans lequel le dispositif d'entraînement comprend deux commutateurs de limite déterminant de manière respective la position ouverte et la position fermée de la vanne.

9. Echangeur thermique selon l'une quelconque des revendications 7 ou 8, dans lequel le dispositif d'entraînement (33) comprend un moteur pas à pas.

10. Echangeur thermique selon la revendication 9, dans lequel l'échangeur thermique a la même forme générale que celle d'un échangeur thermique connu et est par conséquent interchangeable avec celui-ci.

11. Échangeur thermique selon la revendication 10, dans lequel la partie prismatique servant de circuit de dérivation est une unité séparée.
